# EUROPÄISCHE PATENTSCHRIFT

(11) **EP 1 354 695 B1**
(45) Veröffentlichungstag und Bekanntmachung des Hinweises auf die Patenterteilung: **02.12.2009**
(21) Anmeldenummer: 03090107.8
(22) Anmeldetag: 14.04.2003
(51) Int. Cl.: B30B 11/00, B30B 15/00, B30B 11/08

(54) **Verfahren zur umgebungsgeschützen Herstellung von Tabletten auf einer Tablettenpresse und Schutzeinrichtung**
Method for the environmentally protected manufacturing of tablets in a tabletting press and protective device
Procédé de fabrication de comprimés dans un environnement protégé dans une presse pour comprimés et dispositif de protection

(30) Priorität: 18.04.2002 DE 10218220
(43) Veröffentlichungstag der Anmeldung: 22.10.2003
(73) Patentinhaber: Korsch AG, 13509 Berlin (DE)
(72) Erfinder: Zeddies, Helmut, 12589 Berlin (DE); Weisbach, Peter, 12627 Berlin (DE)
(74) Vertreter: Schneider, Henry

(56) Entgegenhaltungen:
- DE-A- 2 363 921
- DE-A- 3 221 469
- US-A- 3 999 922
- US-A- 4 053 266
- PATENT ABSTRACTS OF JAPAN vol. 013, no. 130 (M-808), 30. März 1989 (1989-03-30) & JP 63 299892 A (HATA TEKKOSHO:KK), 7. Dezember 1988 (1988-12-07)

## Beschreibung

Die Erfindung beschreibt eine Tablettenpresse zur umgebungsgeschützten Herstellung von Tabletten mit Schutzeinrichtungen für die Pressenumgebung vor zu verpressenden Tablettenbestandteilen wie toxische Stoffe und/oder Schutzeinrichtungen für die Tabletten vor äußeren Medien wie Sauerstoff gemäß den Merkmalen des Anspruchs 1.

Die Herstellung von Tabletten auf Rundlaufpressen erfolgt unter besonderen abgeschlossenen Prozessbedingungen, um das entstehende Produkt vor Umgebungseinflüssen zu schützen und so eine zuverlässige Einhaltung der Rezeptur zu gewährleisten. Andererseits wird der Schutz der am Produktionsprozess beteiligten Personen vor toxischen Stoffen bzw. allgemein vor Einflüssen, welche die Gesundheit gefährden könnten, angestrebt.

Aus dem allgemeinen Stand der Technik sind Schutzeinrichtungen in Form einer so genannten Handschuhbox (Glovebox) an Maschinen bekannt, um zum Beispiel den Einfluss von radioaktiver Strahlung bei Messungen zu eliminieren. Eine solche Handschuhbox (Glovebox) wird in der DE 32 21 469 C2 in einem Verfahren zur Messung von Strahlung einer Probe verwendet.

Bei der Tablettenherstellung sind Vorrichtungen bekannt, bei denen Schutzeinrichtungen eingesetzt werden, um einen definierten geregelten Überdruck im Herstellungsraum zu sichern, mit dem Umgebungseinflüsse auf das Produkt ausgeschaltet werden. In einer geregelten Unterdruckatmosphäre wird andererseits ein Schutz der am Herstellungsprozess beteiligten Personen erreicht. Diese Schutzeinrichtungen sind durch glockenförmig ausgebildete Hauben realisiert, die auf den Pressraum aufgesetzt werden.

Aus dem DE G 91 03 247.4 ist es bekannt, eine Dichtungsleiste für das Gehäuse einer Tablettenpresse zu verwenden, um ein Verschmutzen des Pressraums von Tablettenpressen durch eintretende Umluft, aber auch ein Austreten von Tablettenstaub in den Aufstellungsraum zu verhindern. Die schwenkbaren Fenster einer Schutzhaube oder andere Platten des Gehäuses werden dazu mit Dichtungsleisten versehen, mit denen eine vollkommene Abdichtung des Pressraums unter einer Schutzhaube erreicht werden soll, wobei die Herstellung der Tabletten unter Vakuum, welches im Pressraum aufrechterhalten wird, erfolgt.

Nachteilig ist bei allen bekannten Lösungen, dass die Zugänglichkeit des Presseninnenraums für Bedienungs-, Reinigungs- und Wartungsarbeiten während des Betriebszustandes der Presse erschwert ist und meist nur durch die Demontage der Schutzeinrichtung ermöglicht wird.

Die Druckschrift JP-A-63299892 zeigt eine Tablettenpresse gemäß dem oberbegriff des Anspruchs 1, bei der Reinigungsarbeiten im Presseninnenraum durchgeführt werden können. Die erforderlichen Reinigungsmittel wie Bürste, Waschmittel und Sprühpistole sind bereits im Presseninnenraum vorhanden. Die Reinigungsarbeiten werden durch Handschuhboxen hindurch durchgeführt. Über die Reinigungsarbeiten hinausgehende Arbeiten wie Wartungsarbeiten sind nicht möglich.

Aufgabe der Erfindung ist es, eine gattungsgemäße Tablettenpresse mit Schutzeinrichtungen zu beschreiben, mit der die Nachteile des Standes der Technik vermieden werden und mit der gewährleistet ist, dass die Tablettenherstellung unter abgeschlossenen besonderen Bedingungen, die den Schutz des Produktes vor Umwelteinflüssen und den Schutz der mit der Produktion in Berührung kommenden Personen ohne wesentliche Einschränkungen der Zugänglichkeit des Presseninnenraumes von außen zur Durchführung von Bedienungs-, Wartungs- und Reinigungsarbeiten gewährleisten, erfolgen kann.

Diese Aufgabe wird durch eine Tablettenpresse mit Schutzeinrichtungen mit den Merkmalen des Anspruchs 1 gelöst.

Die Tablettenpresse nach der Erfindung ist danach **dadurch gekennzeichnet,**
**dass** die Abdeckungen des Presseninnenraums mit Funktionselementen wie Handschuhöffnungen, Teileschleusen, Einfüll- und Absaugöffnungen versehen sind, wodurch im abgedichteten Betriebszustand der Presse von außen Bedienungs-, Wartungs- und Reinigungsarbeiten im Presseninnenraum durchgeführt werden können.

Dazu sind in die beweglichen Abdeckungen des Presseninnenraumes die Zugangselemente wie Handschuhöffnungen mit Abdeckungen, Teileschleusen mit Abdeckungen und mit jeweiligen Dichtungselementen und Sicherheitsschaltern, Überwachungs- und Regelungselementen, Einfüll- und Absaugöffnungen integriert, und für die Materialzufuhr ist eine dichte Flanschverbindung über die Deckplatte des Presseninnenraums und für den Tablettenauswurf nach außen ist ein geschlossenes Transportsystem vorgesehen.

Die den Produktionsraum bildenden Teile der Presse (Presseninnenraum) sind so ausgeführt, dass sie eine nahezu gasdichte Kammer bilden, in die auch während des Betriebszustandes der Presse ein Zugang möglich ist, um Wartungsarbeiten durchzuführen oder um Reparaturen auszuführen oder um Teile oder Stoffe zuzuführen oder zu entnehmen. Das wird ermöglicht, indem erfindungsgemäß die äußeren Abdeckungen des Presseninnenraumes mit den Zugangsfunktionen der aus anderen Anwendungen bekannten Handschuhboxen (Gloveboxen) ausgestattet sind.

Als Betriebszustand wird der Zustand der Presse definiert, in welchem sich keine Pressenteile in Bewegung befinden, aber in dem sich die Presse im funktionsfähigen Zustand mit Abdichtung und Unter/ bzw. Überdruck befindet.

Die Erfindung wird nachfolgend in einem Ausführungsbeispiel für eine Tablettiermaschine (Rundlaufpresse) mit Schutzeinrichtungen beschrieben. In der zugehörigen Zeichnung zeigen:
- Fig. 1:: eine schematische Darstellung einer Rundlaufpresse mit den wesentlichen Elementen der Schutzeinrichtung nach der Erfindung im geschlossenen Zustand und
- Fig. 2:: die schematische Darstellung der Anordnung der Einrichtung nach Fig. 1 in geöffnetem Zustand (Vorderansicht).

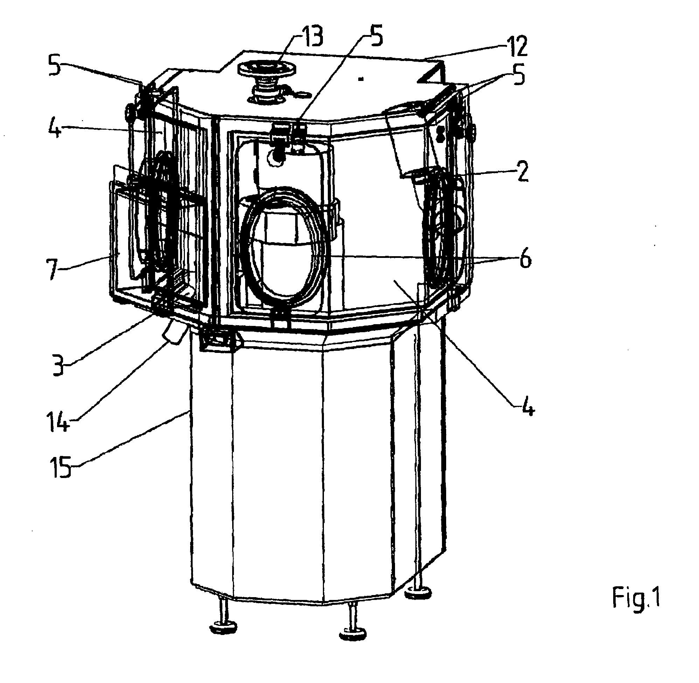

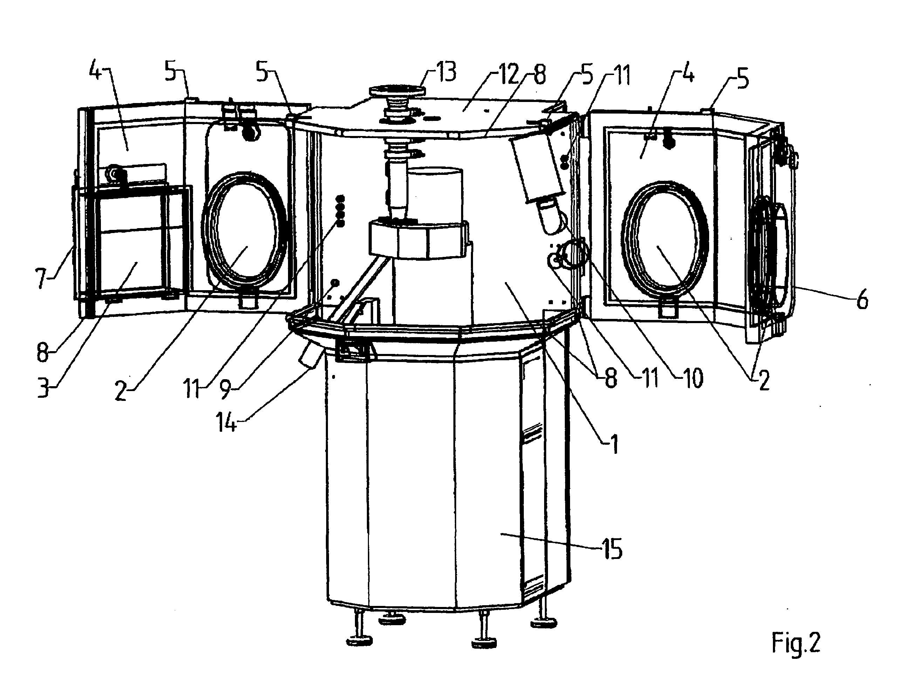

Entsprechend den Darstellungen in den Fig. 1 und 2 sind die den Produktionsraum der Presse bildenden Teile so ausgeführt, dass sie eine nahezu gasdichte Kammer, einen Presseninnenraum 1 mit der nur angedeutet dargestellten Presseinheit, bilden.

Die äußere, einsehbare Verkleidung (Abdeckung) des Presseninnenraums 1 ist so gestaltet, dass sie eine Handschuhbox mit den notwendigen Zugangselementen bildet. Diese Zugangselemente werden gebildet durch seitlich angeordnete Handschuhöffnungen 2, durch die eine Reinigung und Wartung des Presseninnenraums 1 möglich ist, eine Teileschleuse 3 (Fig. 1), durch die im Betriebszustand der Presse Hauptbaugruppen, zum Beispiel eine Fülleinrichtung, Werkzeuge, Reinigungsgeräte und dergleichen ein- und ausgebracht werden können.

Die Funktionalität einer bestehenden, horizontal oder vertikal aufschwenkbaren Pressenverkleidung 4 bleibt erhalten.

Die erforderliche Sicherheit der Presse ist gewährleistet durch Sicherheitsschalter 5, die an der Pressenverkleidung 4, an Abdeckungen 6 der Handschuhöffnungen 2, an einer Abdeckung 7 der Teileschleuse 3 angeordnet sind und die verhindern sollen, dass bei laufender Presse von außen eingegriffen wird oder dass beide Schleusentüren gleichzeitig geöffnet werden.

Für die erforderliche Dichtheit des Presseninnenraumes 1 sind die diesen Raum bildenden Elemente durch geeignete Dichtelemente 8 gegen angrenzende Pressenteile abgedichtet.

An der Rückseite der Presse sind Einfüllöffnungen 9 geeignet für ein Schutzgas bzw. Absaugöffnungen 10 zur Erzeugung eines Unterdruckbetriebes (hier mit Filter) sowie Regelungs- und Überwachungselemente 11 angeordnet (Fig. 2).

Die in der Tablette zu verpressenden Granulate, Pulver werden direkt auf die obere Deckplatte 12 des Presseninnenraumes geführt und abgedichtet über eine zum Beispiel Flanschverbindung 13 in den Presseninnenraum 1 eingebracht.

Die produzierten Tabletten werden innerhalb des geschlossenen Presseninnenraums 1 in einem geschlossenen Transportsystem, hier Rohrsystem, über einen Tablettenauswurf 14 aus der Presse gebracht.

Ein Pressensockel 15 unterhalb des Presseninnenraumes 1 ist mit den üblichen Abdeckungen nach dem Stand der Technik versehen.

### Bezugszeichenliste

- 1: Presseninnenraum mit angedeuteter Presseinheit
- 2: Handschuhöffnung
- 3: Teileschleuse
- 4: Pressenverkleidung
- 5: Sicherheitsschalter
- 6: Abdeckung
- 7: Abdeckung
- 8: Dichtelement
- 9: Einfüllöffnung
- 10: Absaugöffnung
- 11: Regelungs- und Überwachungselement
- 12: Obere Deckplatte
- 13: Flanschverbindung
- 14: Tablettenauswurf
- 15: Pressensockel

## Patentansprüche

1. Tablettenpresse mit einem nahezu gasdichten Presseninnenraum, der von horizontal und/oder vertikal beweglichen Abdeckungen mit Abdichtungen gebildet ist, und mit Schutzeinrichtungen für die Pressenumgebung vor zu verpressenden Tablettenbestandteilen wie toxischen Stoffen und/oder Schutzeinrichtungen für die Tabletten vor äußeren Medien, wie Sauerstoff,
mit in die beweglichen Abdeckungen (4) des Presseninnenraumes integrierte, als Zugangselemente dienende, Handschuhöffnungen und mit dem Presseninnenraum zugeordneten Überwachungs- und Regelungselementen,
**gekennzeichnet durch**
- in die beweglichen Abdeckungen (4) des Presseninnenraumes (1) integrierte Teileschleusen (3);
- in den Presseninnenraum (1) mündende Einfüllöffnungen (9) für ein Schutzgas und Absaugöffnungen (10) zur Erzeugung eines Unterdruckes;
- eine Materialzufuhr über eine obere Deckplatte (12) des Presseninnenraumes (1) mittels einer dichten Flanschverbindung (13) an dem Presseninnenraum (1) und
- einen Tablettenauswurf (14) nach außerhalb des Presseninnenraumes (1) mittels eines geschlossenen Transportsystems.

## Claims

1. Tablet-compressing machine with an almost gas-tight interior space of the machine which is formed by horizontally and/or vertically movable covers with sealings, and provided with protective devices for the machine environment against tablet components which are to be compressed, such as toxic substances and/or protective devices for the tablets against external media, such as oxygen,
with glove openings integrated into the movable covers (4) of the interior space of the machine which serve as access elements and with monitoring and control elements which are associated with the interior space of the machine,
**characterised by**
- component locks (3) which are integrated into the movable covers (4) of the interior space of the machine (1);
- feed openings (9) for a protective gas which open into the interior space of the machine (1) and suction openings (10) for generating a negative pressure;
- a material feeding via an upper cover plate (12) of the interior space of the machine (1) by means of a tight flanged joint (13) at the interior space of the machine (1) and
- a tablet ejecting device (14) to the outside of the interior space of the machine (1) by means of a closed transport system.

## Revendications

1. Presse pastilleuse, avec une chambre intérieure de presse quasiment étanche aux gaz qui est formée de recouvrements mobiles horizontalement et/ou verticalement, et avec des dispositifs de protection pour protéger l'environnement de la presse vis-à-vis de composants de pastilles à comprimer, comme des matériaux toxiques, et/ou des équipements de protection pour protéger les pastilles vis-à-vis d'agents extérieurs, comme l'oxygène,
avec des orifices pour gants intégrés dans les recouvrements (4) mobiles de la chambre intérieure de presse, servant d'éléments d'accès, et avec des éléments de surveillance et de régulation affectés à la chambre intérieure de presse,
**caractérisée par**
- des sas de pièces (3) intégrés dans les recouvrements (4) mobiles de la chambre intérieure de presse (1) ;
- des ouvertures de remplissage (9), débouchant dans la chambre intérieure de presse (1), pour un gaz de protection, et des orifices d'aspiration (10) destinés à produire une dépression ;
- une amenée de matériau via une plaque de couverture supérieure (12) de la chambre intérieure de presse (1) au moyen d'un raccordement à bride (13) étanche sur la chambre intérieure de presse (1), et
- une éjection de pastilles (14) vers l'extérieur de la chambre intérieure de presse (1) au moyen d'un système de transport fermé.
